Europäisches Patentamt

European Patent Office

Office européen des brevets

(11) Veröffentlichungsnummer: **0 041 211**
**B1**

(12) EUROPÄISCHE PATENTSCHRIFT

(45) Veröffentlichungstag der Patentschrift:
14.08.85

(21) Anmeldenummer: 81103988.2

(22) Anmeldetag: 23.05.81

(51) Int. Cl.⁴: **G 03 B 23/12**

(54) Vorführsystem für Dias.

(30) Priorität: 04.06.80 DE 3021138

(43) Veröffentlichungstag der Anmeldung:
09.12.81 Patentblatt 81/49

(45) Bekanntmachung des Hinweises auf die Patenterteilung:
14.08.85 Patentblatt 85/33

(84) Benannte Vertragsstaaten:
AT BE CH FR GB IT LI LU NL SE

(56) Entgegenhaltungen:
DE - A - 2 549 130
FR - A - 815 847
·FR - A - 1 190 112
US - A - 1 845 476
US - A - 3 301 128

(73) Patentinhaber: **Martin, Liesel, Markschiedsweg 27,
D-6336 Solms/OT Oberbiel (DE)**

(72) Erfinder: **Martin, Liesel, Markschiedsweg 27,
D-6336 Solms/OT Oberbiel (DE)**

(74) Vertreter: **Knefel, Siegfried, Dipl.-Math.,
Wertherstrasse 16 Postfach 1924, D-6330 Wetzlar (DE)**

ACTORUM AG

## Beschreibung

Die Erfindung betrifft ein Vorführsystem für Dias nach dem Gattungsbegriff des Anspruches 1.

Es ist bekannt, Dias zum Vorführen beispielsweise einer Kassette zu entnehmen und einzeln in das Gerät einzuführen. Erfolgt dieses Einführen und das Zurückführen in die Kassette sowie der Weitertransport der Kassette automatisch, dann ist hierfür ein relativ grosser mechanischer Aufwand erforderlich. Darüber hinaus erfordert ein derartiger Bildwechsel relativ viel Zeit. Schliesslich nehmen die Kassetten aber auch sehr viel Platz weg, d.h. es lassen sich im Vergleich zum Volumen der Kassette nur wenige Dias in der Kassette anordnen.

Aus diesem Grunde hat man bereits vorgeschlagen, die Dias hintereinanderliegend als Film anzuordnen und den Film aufzuwickeln. Damit beim Aufwickeln die Oberflächen der Dias nicht verkratzen, hat man gemäss der DE-A-2 456 175 Abstandshalter auf dem Diafilmstreifen vorgesehen. Diese Abstandshalter vergrössern das Aufwickelvolumen.

Gemäss einer anderen Ausführung (DE-A-2 708 430) werden die Dias in einzelnen Rahmen angeordnet, und zwischen den einzelnen Rahmen sind Gelenke angebracht, so dass ein Diaband entsteht, das zickzackförmig zusammengelegt werden kann. Auch diese Ausbildung erfordert viel Platz.

Gemäss einer weiteren Ausführung (DE-A-2 549 130) werden gerahmte Dias mit Hilfe von Klebestreifen zu einer Diakette miteinander verbunden. Ein derart gebildetes Band trägt auch im zusammengerollten Zustand stark auf, einmal weil gerahmte Dias wesentlich dicker sind als ungerahmte Dias und weil es darüber hinaus schwierig ist, das Band zu einer glatten Spirale aufzurollen, weil die gerahmten Dias danach trachten, an den Verbindungsstellen der «Kettenglieder» abzuknicken, so dass letztendlich eine polygonartige Spirale entsteht, zwischen deren Windungen erhebliche tote Räume liegen.

Die zum Stand der Technik gehörenden Geräte zeigen ferner den Nachteil, dass die Dias im Band unverrückbar fest angeordnet sind, wodurch sich bei der Vorführung infolge des Wärmeeinflusses durch die Beleuchtungseinrichtung ein Durchbiegen des im Bildfenster erscheinenden Dias nicht vermeiden lässt. Dieses Durchbiegen erfordert eine Nachfokussierung auf den wesentlichen Bildinhalt, oder es zeigen sich in der Projektion störende Newtonsche Ringe, falls die Dias in Rahmen mit Glasscheiben angeordnet sind.

Aufgabe der Erfindung ist es, ein Diavorführsystem anzugeben und insbesondere eine Diaspeicherung, bei der einerseits in einer Kassette eine Vielzahl von Dias, beispielsweise bis zu 1000 Stück und mehr angeordnet werden können, ohne dass es hierfür eines grossen Platzes bedarf, bei dem deshalb ferner keine aufwendigen und auftragenden Mittel notwendig sind, wie Abstandshalter, um die Oberfläche der Dias zu schonen und bei dem Wärmeeinflüsse bei der Projektion kein Durchbiegen der Dias bewirken.

Diese Aufgabe wird durch das kennzeichnende Merkmal des Anspruches 1 gelöst.

Dadurch, dass jetzt die Dias jeweils zwischen zwei Abdeckungen angeordnet sind und für jedes Dia eine Maske vorgesehen ist, in der das Dia mit Spiel angeordnet ist, d.h. sozusagen schwimmend gelagert ist, biegt sich das Dia nicht aus den Bildöffnungen der Abdeckung heraus. Andererseits halten die Abdeckungen das Dia im Band fest.

Durch die besondere Lagerung der Dias im Band ergibt sich der weitere Vorteil, dass sich die vom «Rahmen» auf das Dia und umgekehrt übergeleitete Wärmeenergie von allen Seiten her gleichmässig über das Dia verteilt, so dass auch eine gleichmässige Erwärmung des Dias stattfindet, wodurch eine Teildurchbiegung ausgeschlossen wird.

Ganz besonders macht sich dieser Vorteil bei der mäanderförmigen Begrenzung der Bildöffnung nach den Unteransprüchen bemerkbar.

Dadurch, dass weiterhin die vordere und die hintere Abdeckung um jeweils eine Bildbreite versetzt ist, kann sukzessive ein Dia nach dem anderen mit Hilfe der Abdeckungen aneinandergereiht werden. Durch diese Massnahme kann das Diaband beliebig lang ausgebildet werden. Auch ist eine spätere Herausnahme eines Dias durch Trennen der Abdeckungen leicht möglich, aber auch ein späteres Einfügen eines weiteren Dias in das Band.

Am Anfang und am Schluss des Bandes wird man eine Halbabdeckung vorsehen, die also gerade ein Einzeldia auf der Vorder- oder Rückseite erfasst, um einen einheitlichen Bandabschluss zu erhalten.

Wie aus den Unteransprüchen ferner hervorgeht, kann die Bildfeldbegrenzung durch die Folien aus geraden Schnittlinien bestehen, welche samt der äusseren Begrenzung der Folie ausgestanzt sein können. Als vorteilhaft hat sich aber auch eine Mäanderform erwiesen, d.h. eine Art zickzackförmige Begrenzung, weil die durch diese Begrenzung entstehenden Laschen, abgesehen von dem obengenannten Wärmevorteil, es auch ermöglichen, beispielsweise mit Hilfe eines Stempels oder dergleichen, der in etwa die Grösse der Bildöffnung hat, das Dia aus dem Band herauszudrücken. In die dann entstehende Öffnung kann ein neues Dia eingelegt und die Laschen können zurückgebogen werden.

Auf der Zeichnung sind Ausführungsbeispiele der Erfindung dargestellt, und zwar zeigen:

Fig. 1 einen Ausschnitt aus einem fertigen Diaband;

Fig. 2 einen Schnitt nach der Linie II–II der Fig. 1;

Fig. 3 einen Schnitt nach der Linie III–III der Fig. 2;

Fig. 4 eine Einzelheit der Fig. 1 bis 3;

Fig. 5 bis 8 geänderte Ausführungsbeispiele;

Fig. 9 eine Endabdeckung;

Fig. 10 die Draufsicht auf eine Kassette;

Fig. 11 einen Schnitt nach der Linie XII–XII der Fig. 10;

Fig. 12 eine perspektivische Darstellung des Projektors;

Fig. 13a, b, c den Mechanismus zum Verbinden der Bandenden in den Kassetten;

Fig. 14 ein geändertes Ausführungsbeispiel;

Fig. 15a, b, c ein geändertes Ausführungsbeispiel;

Fig. 16 eine Einzelheit der Erfindung;

Fig. 17 eine Einzelheit des Gerätes;

Fig. 18 die Seitenansicht der Fig. 17.

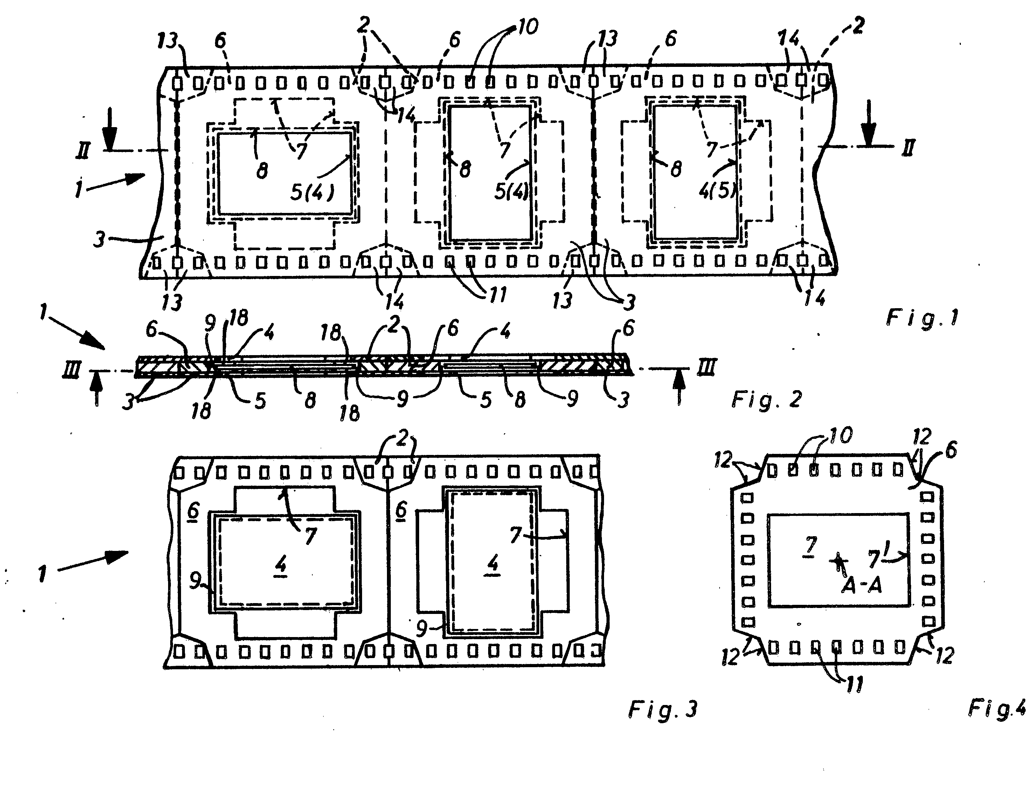

Gemäss den Fig. 1 bis 4 besteht das Diaband 1 aus Folienstücken 2 und 3, welche Bildöffnungen 4 und 5 tragen, und zwar weist das Folienstück 2 jeweils zwei Bildöffnungen 4 auf und das Folienstück 3 zwei Bildöffnungen 5 von gleicher Grösse wie das Folienstück 2. Die Bildöffnungen liegen jeweils hintereinander in Bandrichtung gesehen.

Die Foleinstücke 2 und 3 sind jeweils um eine Bildbreite gegeneinander versetzt und mit ihren Flächen aneinander befestigt, zum Beispiel verklebt oder verschweisst. Zwischen die Folienstücke 2 und 3 ist vor dem Verkleben jeweils eine Maske 6 gelegt, welche eine Bildöffnung 7 aufweist, und in die Bildöffnung 7 wurde ein entsprechend zugeschnittenes Dia gelegt.

Zum Befestigen der Folienteile und der Maske aneinander kann die Maske auf beiden Seiten selbstklebend sein.

Die Bildöffnung 7 der Maske 6 ist etwas grösser als die Bildöffnungen 4 und 5 der Folienstücke 2 und 3. Das eingelegte Dia ist etwas kleiner als die Bildöffnung 7 der Maske 6, jedoch grösser als die Bildöffnungen 4 und 5 der Folienstücke 2 und 3.

Das Dia 8 liegt somit mit geringem Spiel 9 in der Maske 6 zwischen deren Bildfeldrändern 7', kann aber andererseits nicht durch die Bildöffnungen 4 und 5 der Folienstücke 2 und 3 herausfallen.

Das Dia liegt auch mit Spiel 18 zwischen den Rändern der Bildöffnungen der Folien, um unterschiedliche Filmdicken, welche bei Farbdias auftreten, zu berücksichtigen.

Die Folienstücke 2 und 3 sind jeweils um eine Bildbreite versetzt angeordnet, so dass jeweils an das überstehende Folienstück eine neue Maske mit einem neuen Dia angelegt werden kann, um dann mit einem weiteren Folienstück verbunden zu werden.

Die Dias 8 sind so zugeschnitten, gegebenenfalls unter Belassung eines Randes, bzw. ist die Grösse der Öffnungen 4, 5 und 7 so gewählt, dass der eigentliche Bildinhalt des Dias bei der Projektion wiedergegeben wird.

Die Folienstücke 2 und 3 sowie die Masken 6 weisen an ihren Rändern jeweils Perforationen 10 und 11 auf, in die Antriebsritzel für den Transport des Bandes greifen können.

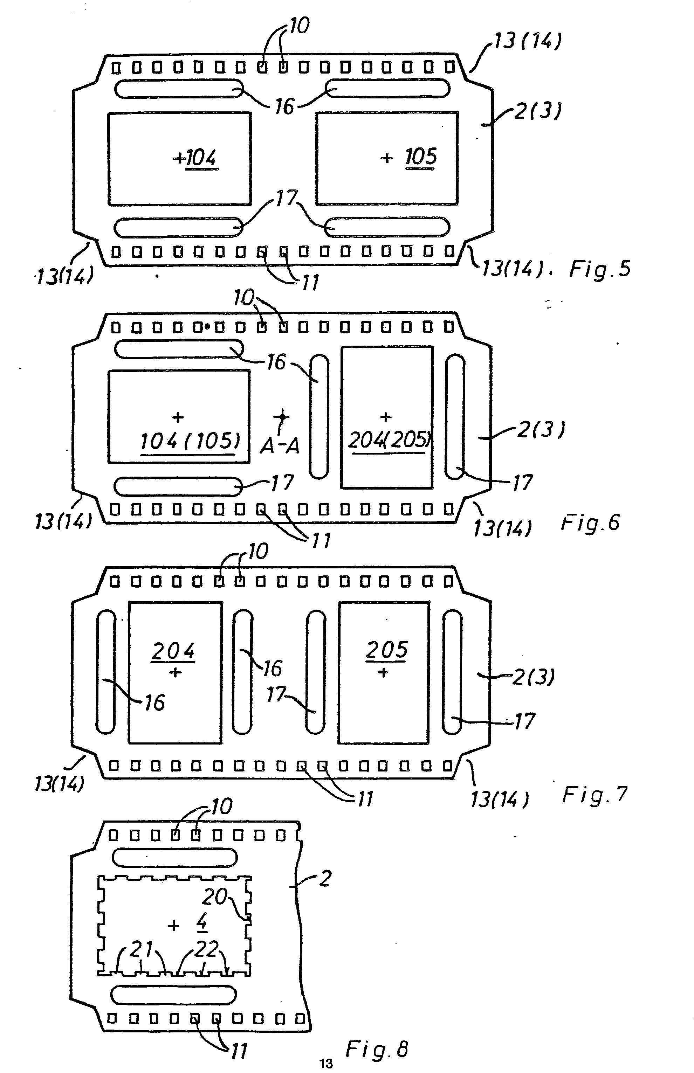

Will man nur Bilder im Querformat in das Band einordnen, kann man Folienstücke 2 und 3 verwenden, deren Bildöffnungen 104 und 105 von Haus aus ein Querformat zeigen (Fig. 5).

Will man nur Bilder im Hochformat im Band anordnen, können Folienstücke 2 und 3 verwendet werden, deren Bildöffnungen 204 und 205 gemäss Fig. 7 von vornherein in den Folienstücken im Hochformat ausgebildet sind.

Sollen Dias unterschiedlich im Quer- und Hochformat angeordnet werden, kann man eine Ausführung der Folienstücke 2 und 3 nach Fig. 6 wählen, d.h. eine Bildöffnung 104, 105 im Querformat vorsehen und die Nachbarbildöffnung 204, 205 im Hochformat. Durch Drehen der Folienstücke 2 und 3 um 180° um die senkrecht auf der Zeichenebene stehende Achse A–A können die Bildformate vertauscht werden.

Es ist aber auch denkbar, quadratische Öffnungen vorzusehen für Dias, deren Bildinhalt quadratisch ist. Auch können solche Quadratformate mit nicht quadratischen rechteckigen Öffnungen, wie oben beschrieben, in den Folien kombiniert auftreten.

Die Öffnungen 4 und 5 der Folienstücke 2 und 3 in den Fig. 1, 2 und 3 stellen eine Kombination einer Quer- und Hochformatöffnung dar. Die Maskenöffnungen sind kreuzförmig ausgebildet, um Dias wahlweise im Hoch- oder Querformat einlegen zu können.

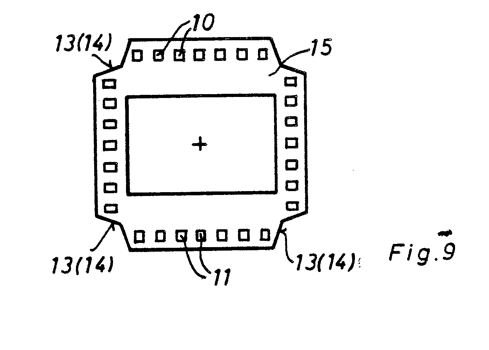

Beim Aneinanderreihen von Folienstücken mit eingelegten Masken und Dias bleibt am Ende und am Anfang des Bandes jeweils ein überstehendes Feld einer Abdeckung 2 oder 3 frei. Um hier einen glatten Bandabschluss mit eingelegtem Dia zu erhalten, sind neben den Doppelbildfolienstücken Einzelbildfolienstücke 15 (Fig. 9) vorgesehen, welche unter Einlegung einer Maske gemäss Fig. 4 und eines Dias auf das überstehende Ende einer Doppelbildfolie 2 oder 3 geklebt werden.

Wie aus den Fig. 5 bis 8 hervorgeht, tragen die Folienstücke und auch die einzulegenden Masken zusätzliche Öffnungen 16 und 17 mit einer transparenten Einlage, beispielsweise indem die Maske 6 an der Stelle der Öffnungen 16 und 17 transparent ausgebildet ist. Die Öffnungen 16 und 17 sowie die transparente Einlage dienen zur Beschriftung des Bildes und deren Projektion.

Wie aus den Fig. 1 bis 8 ferner hervorgeht, sind die Ecken 12 der Maske 6 abgeschnitten, um die Maske leicht mit ihrer Öffnung 7 im Hoch- oder Querformat zwischen den Folienstücken 2 und 3 einlegen zu können. Die Ecken 13 und 14 der Folienstücke 2 und 3 sind entsprechend abgeschnitten, um die Folienstücke leichter und in exakter Übereinstimmung mit der Maske um eine Bildbreite versetzt zusammenfügen zu können. Dasselbe gilt für die Ecken 13 und 14 der Einzelbildfolienstücke 15 der Fig. 9.

Die Bildöffnungen der Folienstücke 2, 3 und 15 bei den vorherbeschriebenen Ausführungsbeispielen sind geradlinig begrenzt, vorteilhaft aus den Folien 2, 3 und den Masken 6 ausgestanzt.

Fig. 8 zeigt ein geändertes Ausführungsbeispiel. Hier ist die Bildfeldöffnung 4 der Folie 2 an ihrem Rand durch eine mäanderförmige Linie 20 gebildet. Die Folie 3 zeigt bei Verwendung einer derartigen Ausbildung ebenfalls eine mäanderförmige Begrenzung, bei der jedoch die Laschen 21 die Luken 22 der Bildfeldbegrenzung 20 abdekken, so dass wiederum nach dem Zusammenlegen der Folienstücke 2 und 3 eine etwa geradlinige Begrenzung entsteht.

Diese Ausbildung hat den Vorteil, dass mit Hilfe eines Stempels etwa in der Grössenordnung der Bildöffnungen 4 und 5 ein eingelegtes Dia aus dem Band herausgedrückt werden kann, wobei sich die Laschen 21 der Folienstücke 2 und 3 ausbiegen. Nach Einlegen eines neuen Dias zwischen die Laschen 21 der Folienstücke 2 und 3 können diese zurückgedrückt werden. Auf diese Weise kann ein Dia im fertigen Band nachträglich und in einfacher Weise ausgewechselt werden.

Die Abdeckfolien 2 und 3, ebenso die Masken 6 sind bei den vorhergehenden Ausführungsbeispielen biegsam und temperaturbeständig, so dass das gebildete Diaband beispielsweise aufgerollt in eine Kassette eingelegt werden kann. Die Oberfläche der Dias wird hierbei nicht beschädigt, da ihre Oberfläche auf der Vorder- und Rückseite stets tiefer liegt als die äussere Oberfläche der Folienstücke 2 und 3 und damit des Bandes 1. Ein Herausbiegen des Dias aus einer der Bildöffnungen beim Zusammenrollen des Bandes ist ebenfalls nicht zu befürchten, da die Dias mit Spiel im Band gelagert sind.

Die Folienstücke 2 und 3 sowie 15 und auch die Masken 6 weisen an ihrem Rand Perforationen 10 und 11 auf, in die zum Transport des Bandes Ritzel eingreifen können.

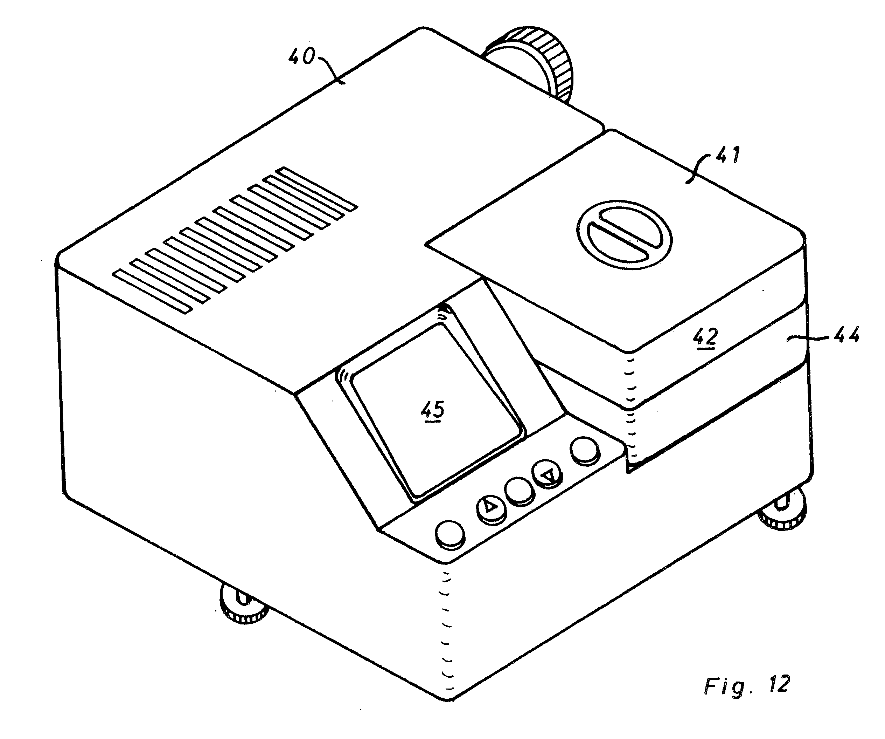

Fig. 12 zeigt den Projektor in perspektivischer Darstellung.

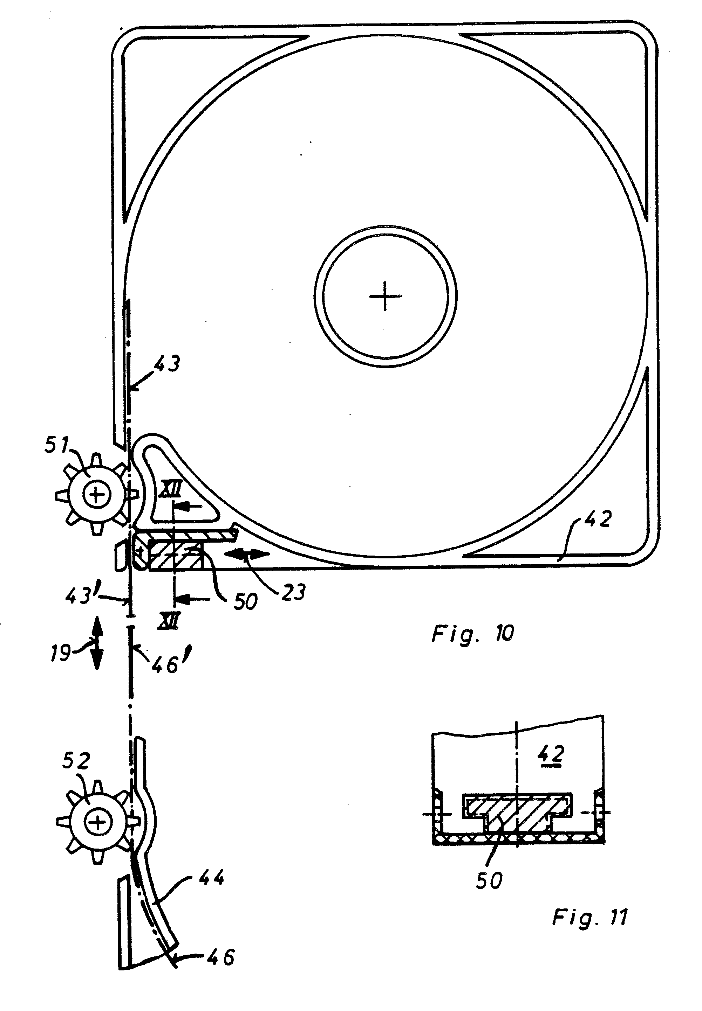

Der Projektor 40 weist eine Doppelkassette 41 auf, welche einerseits im Kassettenteil 42 (Fig. 10) das mit Dias bestückte Band 43 trägt und einen Kassettenteil 44, der ein Bandstück ohne Dias enthält. Zum Vorführen der Dias wird das Anfangstück 43' des Bandes 43 des Kassettenteiles 42 mit dem aus dem Kassettenteil 44 herausragenden Endstück 46' des dialosen Bandes 46 automatisch befestigt und anschliessend durch den Projektor geführt. Durch die Kassetten greifende Antriebsritzel 51, 52 sorgen über einen mechanischen Malteserkreuzantrieb (nicht dargestellt) für das sukzessive Einlaufen der Dias in das Projektionsfenster des Vorführgerätes.

Wie aus Fig. 12 zu erkennen ist, weist der Projektor 40 eine Mattscheibe 45 auf, auf der das noch nicht ins Projektionsfenster eingelaufene Dia, also das diesem Dia vorgelagerte Dia, vorbetrachtet werden kann, damit der Benutzer des Gerätes seinen Vortrag auf die Bildfolge rechtzeitig abstimmen kann.

Das Zusammenfügen der Filmenden 43' und 46' erfolgt automatisch beim Einschieben der Kassette 41 bzw. des Kassettenteiles 42 in den Projektor 40. Die Kassettenteile 42 und 44 können hierbei fest miteinander verbunden sein, d.h. eine Doppelkassette 41 bilden. Es können aber auch Einzelkassetten 42 und 44 vorgesehen sein, derart, dass die Kassette bzw. der Kassettenteil 44 stets im Projektor verbleibt und nur der Kassettenteil 42 auswechselbar ist. Dies gilt auch für die Ausbildung der Kassette nach Fig. 10. Im abgenommenen Zustand können die Kassettenteile bei dieser Ausbildung gegeneinander längs einer nicht dargestellten Führung zusammenschiebbar sein, um sie platzsparend lagern zu können.

Die Filmenden in den Kassetten müssen zum selbsttätigen Befestigen aneinander sehr genau zueinander liegen. Deshalb ist für das Einschieben, zumindest des Kassettenteiles 42, wie in Fig. 11 dargestellt, eine T-Führung 50 vorgesehen, welche quer zur Laufrichtung 19 des Bandes liegt, d.h. der Kassettenteil wird in Richtung des Pfeiles 23 oder senkrecht zur Zeichenebene in das Gerät eingeschoben oder aus diesem herausgezogen.

Der Transport der Filme erfolgt mit Hilfe der Ritzel 51 und 52, von denen je ein Ritzel einer Kassette bzw. einem Kassettenteil zugeordnet ist und von aussen durch das Kassettengehäuse hindurchgreift.

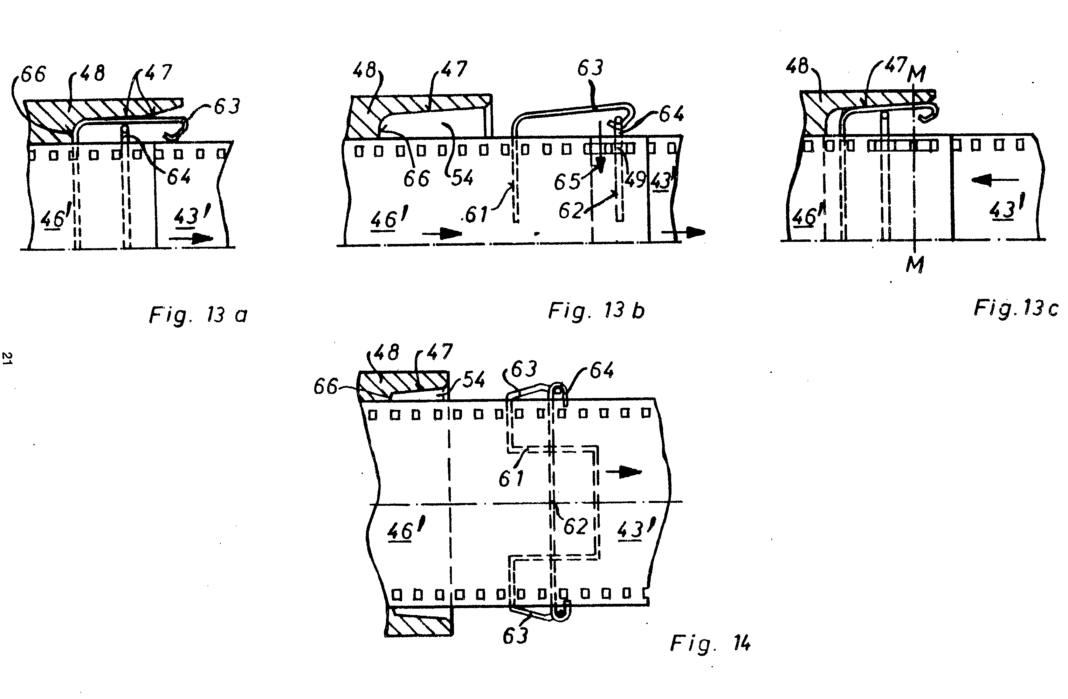

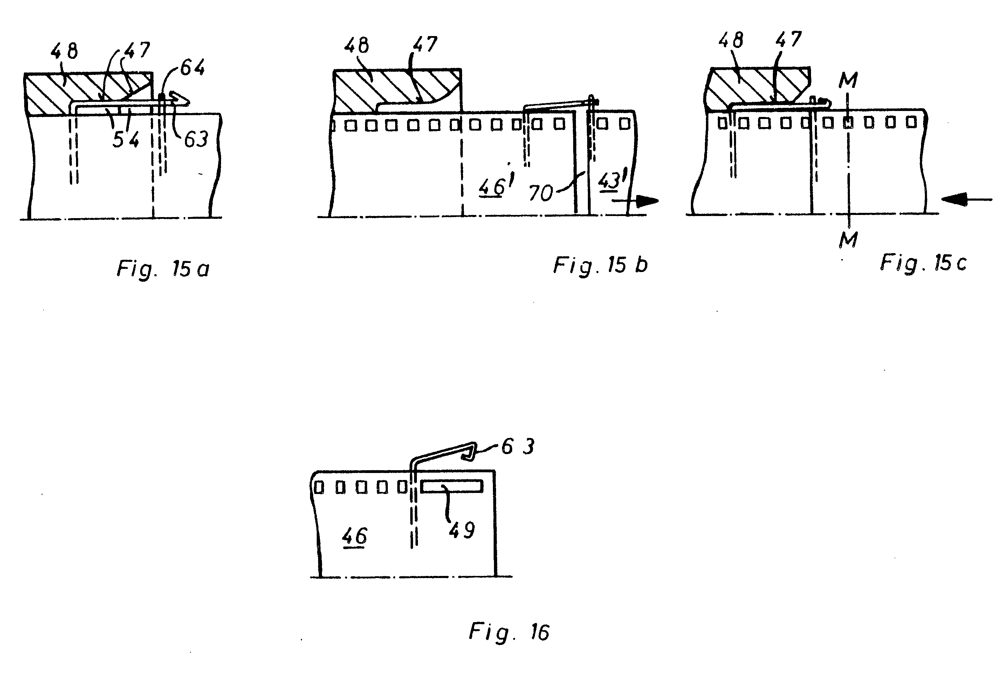

Beim Zusammenführen der Filmenden 43' und 46' nähern sich die Filmenden senkrecht zur Zeichenebene entweder derart, dass sie gegeneinander stossen, gegebenenfalls unter Belassung eines Zwischenraumes (Fig. 15), oder derart, dass sie übereinanderliegen (Fig. 13). In die Filmenden 46' und 43' sind Drähte 61 und 62 eingelegt, von denen der Draht 61 in Richtung des Filmendes 43' greifende Haken 63 aufweist und der in das Filmende 43' eingelegte Draht 62 Aufnahmehaken 64. Die Haken ragen über die Ränder der Bänder 43 und 46 nach beiden Seiten hinaus.

Mit Hilfe von in den Kassetten angeordneten Schrägflächen 47 sind die Drahtenden 63 in der Ausgangsposition nach Fig. 13a oder 15a und bei aus dem Gerät heraugenommener Kassette zu den Filmrändern hin gedrückt. Beim Einschieben der Kassette in das Gerät bleibt diese Lagerung unverändert, so dass der Haken 64 des Filmendes 43' beim Einschieben der Kassette unter die Haken 63 des Filmendes 46' ohne Behinderung greifen kann. Laufen nunmehr die Ritzel 51 und 52 an, dann wird das Filmende 46' nach rechts gezogen (Fig. 13b und 15b). Das Ritzel 51 läuft zunächst in einem Langloch 49 der Perforation des Filmendes 46' leer, so dass eine feste Verbindung zwischen den Filmenden 43' und 46' entsteht, indem die Haken nunmehr ineinandergreifen, und es erfolgt sodann der eigentliche Filmtransport.

Beim Rückspulen des Filmes läuft das Filmende 46' in die Position der Fig. 13c bzw. 15c. Das ist die Ausgangsposition. Die Haken 63 werden wiederum zu den Filmenden in Richtung der Pfeile 65 durch die Schrägflächen gedrückt und bleiben in dieser Lage, bis sie auf einen Anschlag 66 laufen (Fig. 13, 14, 15, 16). Da das Ritzel 51 in dieser Stellung in dem Langloch 49 leerläuft, bleibt das die Dias tragende Bandende 46' in dieser Lage stehen. Die Kassette 42 kann nunmehr aus dem Gerät herausgezogen und durch eine neue ersetzt werden.

Die Haken- und Schrägflächenausbildung ist zu beiden Seiten eines jeden Filmendes vorgesehen.

Damit die Filmenden nicht senkrecht zur Zeichenebene auslaufen, insbesondere bei der Kopplung oder Entkopplung der Filmenden, sind senkrecht zur Zeichenebene weitere Schrägflächen 54 vorgesehen, die über die Breite des Filmendes einen Schlitz in dem die Schrägflächen tragenden Körper 48 bilden.

Damit sich die Haken 63 und 64 beim Koppeln und Entkoppeln der Filmenden nicht auslenken, d.h. sich um ihre Achsen drehen und deshalb aneinander vorbeilaufen, ist der Draht 61 gemäss Fig. 14 mäanderförmig in das Filmende 46′ eingelegt. Eine gleiche Massnahme kann für den Draht 62 vorgesehen sein. Diese Mäanderform behindert nicht das Aufwickeln des Filmes, da auch die in das Filmende eingelegten Drahtteile federnd ausgebildet sind.

Zur Kopplung und Entkopplung der Filmenden 43′ und 46′ können diese entweder übereinanderlaufen bzw. in der Ausgangsstellung übereinander liegen, wie in Fig. 13 dargestellt. Es genügt aber auch, die Haken so lang auszubilden, dass sich die Filmenden lediglich nähern müssen, gegebenenfalls unter Freilassung eines Zwischenraumes 70, wie in Fig. 15 dargestellt, wobei dann jedoch darauf zu achten ist, dass beim Transport die Perforationslöcher den erforderlichen Abstand einnehmen.

Für das Koppeln und Entkoppeln ist die Achslage des der Kassette 42 zugeordneten Ritzels von Bedeutung. Die Achslagen sind in den Fig. 13c und 15c mit M–M eingezeichnet. Der Transport des gekoppelten Filmbandes erfolgt mit Hilfe beider Ritzel 51 und 52. Das Koppeln und Entkoppeln erfolgt durch Eingriff des Ritzels 52 in die Perforation und Verschieben des Filmendes 46′ gegen das Filmende 43′ und der in diesen Enden eingelegten Haken. Bei diesem Vorgang läuft das Ritzel 51 mit, jedoch, wie oben beschrieben, in dem Langloch leer.

Die Kassetten 42 und 44 bzw. die Kassettenteile 42 und 44 müssen nicht übereinanderliegend angeordnet sein, sondern können auch getrennt voneinander liegen, wie in Fig. 10 angedeutet. Sind sie übereinanderliegend angeordnet, müssen Mittel für die Umlenkung des Filmes im Vorführgerät vorgesehen sein.

Es ist auch nicht erforderlich, in einer der Kassetten ein bildfreies Bandstück zu belassen. An den Anfang und/oder das Ende des die Dias tragenden Bandes kann auch ein bildloses Stück unlösbar befestigt sein.

Die Haken der Fig. 13 bis 15 brauchen darüber hinaus nicht in der Zeichenebene zu liegen, sondern wenigstens eines der Hakenpaare kann auch senkrecht zur Zeichenebene angeordnet sein, wie in Fig. 15a dargestellt worden ist.

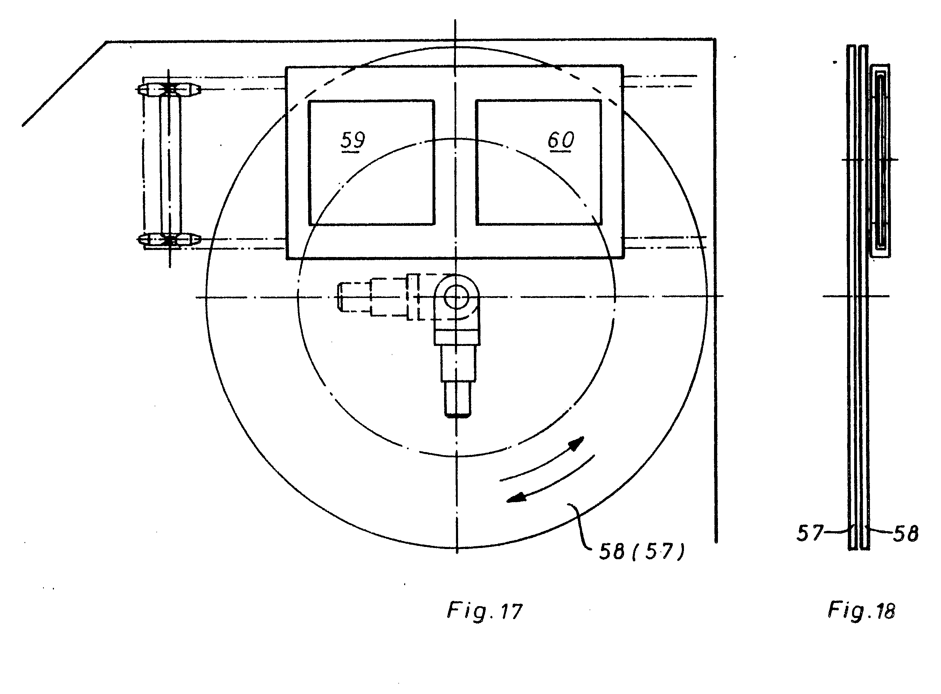

Im Projektor ist eine Doppelblende vorgesehen, welche beim Diawechsel den Abbildungsstrahlengang abdunkelt. Die Fig. 17 und 18 zeigen den beispielsweisen Aufbau einer solchen Doppelblende. Die Blende besteht aus zwei gegensinnig umlaufenden Scheiben 57 und 58 oder Bändern. Jede der Scheiben weist zwei Öffnungen 59 und 60 auf. In der Projektionsstellung liegen die Öffnungen der beiden Scheiben übereinander, so dass durch die Öffnungen 60 die Projektion des Dias auf eine Leinwand erfolgen kann und durch die Öffnungen 59 die Vorbetrachtung des Dias mit Hilfe der Mattscheibe 45.

Bei dieser Ausbildung öffnet und schliesst die Blende sehr schnell, so dass der Bildtransport beim Bildwechsel nicht als unangenehm wahrgenommen wird. Darüber hinaus lassen sich bei dieser Ausbildung schnelle Bildfolgen projizieren, die bei entsprechend schneller Aufnahmefolge den Eindruck eines bewegten Geschehensablaufes nachempfinden lassen.

Die Ritzel 51 und 52 genügen im allgemeinen nicht, den Film in den Kassetten 42 und 44 aufzuwickeln. Hierfür sind besondere Antreibsmittel vorgesehen. Vorteilhaft wird man hierfür den Auf- und Abwickelspulen ein geringes entgegengesetztes Drehmoment auferlegen, so dass der Film 80 stets gespannt aufgewickelt wird. Beispielsweise können hierfür Elektromotore vorgesehen sein, von denen je einer einer Kassette zugeordnet ist, und die mit unterschiedlichen Spannungen laufen.

## Patentansprüche

1. Vorführsystem für Dias, bei dem die Dias bandförmig hintereinanderliegend angeordnet und durch zwei auf den beiden Seiten der Dias befindliche biegsame Abdeckungen sowie durch eine dazwischen befindliche, die Dias umrahmende Maske gehalten sind und mit Hilfe eines Antriebes, der gleichzeitig eine Blende betätigt, sukzessive in den Projektionsort eingeführt werden, wobei das Band mit den Dias ausserhalb des Projektionsortes aufgerollt ist, dadurch gekennzeichnet, dass die Dias im Band ungerahmt gehalten sind, dass das Band aus Teilstücken zusammengesetzt ist, welche eine erste biegsame Abdeckung (2) mit mehreren in Reihe nebeneinander liegenden Bildöffnungen (4) und eine zweite biegsame Abdeckung mit der gleichen Zahl von in Reihe nebeneinander liegenden Bildöffnungen (5) aufweisen, dass die Abdeckungen miteinander verbunden sind, dass die eine Abdeckung gegenüber der anderen Abdeckung um einen Bildöffnungsabstand in Längsrichtung versetzt, im übrigen jedoch die Bildöffnungen übereinanderliegend angeordnet sind, dass jeweils das überstehende Abdeckungsstück eines Band-Teilstückes mit dem überstehenden Stück des nächsten Band-Teilstückes unter Übereinanderliegen der Bildöffnungen verbunden ist, dass jeweils zwischen den Abdeckungen eine die Bildöffnungen (4, 5) in beiden Abdeckungen (2, 3) umrahmende Maske (6) angeordnet ist, dass die Öffnung (7) jeder Maske (6) etwas grösser ist als das darin zwischen den Abdeckungen (2, 3) angeordnete Dia (8) und etwas grösser als die von ihr umrahmten Bildöffnungen (4, 5) in den Abdeckungen (2, 3), dass die Maske geringfügig dicker ist als das Dia (8), wodurch das Dia (8) in der Maske (6) und zwischen den Abdeckungen allseitig mit Spiel (9) gelagert ist, und dass die Abmessungen der Bildöffnungen in den Abdeckungen kleiner sind als die einzulegenden Dias.

2. System nach Anspruch 1, dadurch gekennzeichnet, dass die Abdeckungen durch Folienstücke gebildet sind.

3. System nach Anspruch 1, dadurch gekennzeichnet, dass jedes Folienstück zwei Bildöffnungen aufweist.

4. System nach Anspruch 1, dadurch gekennzeichnet, dass die sich überlappenden Folienstücke miteinander verklebt oder verschweisst sind.

5. System nach Anspruch 1, dadurch gekennzeichnet, dass die Abdeckungen und/oder die Maske (6) selbstklebend sind.

6. System nach Anspruch 1, dadurch gekennzeichnet, dass das Dia (8) mit einer Schneidmaschine auf den eigentlichen Bildinhalt zugeschnitten ist oder auf den Bildinhalt mit einem geringen Rand.

7. System nach Anspruch 1, dadurch gekennzeichnet, dass die Bildöffnungen (4, 5) der Abdeckungen gerade Begrenzungslinien aufweisen.

8. System nach Anspruch 1, dadurch gekennzeichnet, dass die Begrenzungen der Bildöffnungen (4, 5) durch mäanderförmige Linien (20) gebildet sind und die in Richtung auf das Bildfeld weisenden Laschen (21) ausbiegbar sind.

9. System nach Anspruch 8, dadurch gekennzeichnet, dass die Laschen (21) mit Hilfe eines vorgesehenen Stempels ausbiegbar sind.

10. System nach Anspruch 8, dadurch gekennzeichnet, dass die Laschen (21) der mäanderförmigen Begrenzungen der Bildöffnungen in der ersten und zweiten Abdeckung (2, 3) auf Lücke gesetzt sind.

11. System nach Anspruch 10, dadurch gekennzeichnet, dass die Laschen (21) in der ersten und zweiten Abdeckung zusammengenommen eine geradlinige Begrenzung der Bildöffnung bilden.

12. System nach Anspruch 1, dadurch gekennzeichnet, dass die Abdeckungen aus temperaturbeständigen Folien (2, 3) bestehen.

13. System nach Anspruch 12, dadurch gekennzeichnet, dass die Folien bis etwa 200°C temperaturbeständig sind.

14. System nach Anspruch 1, dadurch gekennzeichnet, dass die Dias (8) ohne zusätzliche Abdeckung, wie Glasscheiben, Klarsichtfolien, zwischen den Abdeckungen (2, 3) im Band (1) gelagert sind.

15. System nach Anspruch 1, dadurch gekennzeichnet, dass die Bildöffnungen einer Abdeckung für die Anordnung von Dias im Hoch- (204, 205) und/oder Querformat (104, 105) ausgelegt sind.

16. System nach Anspruch 1, dadurch gekennzeichnet, dass die Bildöffnungen quadratisch ausgebildet sind.

17. System nach Anspruch 1, dadurch gekennzeichnet, dass die Bildöffnungen in den Masken kreuzförmig zur wahlweisen Einpassung eines Dias im Hoch- oder Querformat ausgebildet sind.

18. System nach Anspruch 1, dadurch gekennzeichnet, dass die Masken (6) eine äussere quadratische Form aufweisen, jedoch nur eine einer Diaform angepasste Öffnung (7).

19. System nach Anspruch 1, dadurch gekennzeichnet, dass die Bildöffnungen aus den Abdeckungen und der Maske ausgestanzt sind.

20. System nach Anspruch 1, dadurch gekennzeichnet, dass die Abdeckungen und die Masken wenigstens eine zusätzliche, mit einem beschriftungsfähigen Material ausgelegte Öffnung (16, 17) aufweisen.

21. System nach Anspruch 1, dadurch gekennzeichnet, dass für die Bandenden eine erste und/oder zweite Abdeckung (15) für die Abdeckung eines einzelnen Dias vorgesehen ist.

22. System nach Anspruch 1, dadurch gekennzeichnet, dass die Abdeckungen an ihren Rändern eine in Bandrichtung laufende Perforation (10, 11) aufweisen.

23. System nach Anspruch 1, dadurch gekennzeichnet, dass die Masken an wenigstens zwei gegenüberliegenden Rändern eine Perforation aufweisen.

24. System nach Anspruch 1, dadurch gekennzeichnet, dass die Abdeckungen abgeschnittene Ecken (12, 13, 14) aufweisen.

25. System nach Anspruch 1, dadurch gekennzeichnet, dass die Masken abgeschnittene Ecken aufweisen.

26. System nach Anspruch 1, dadurch gekennzeichnet, dass eine Kassette (42) oder ein Kassettenteil für die Aufnahme des die Dias tragenden Bandes (43) vorgesehen ist.

27. System nach Anspruch 26, dadurch gekennzeichnet, dass eine weitere Kassette (44) oder ein Kassettenteil mit einem keine Dias tragenden Band (46) vorgesehen ist.

28. System nach Anspruch 27, dadurch gekennzeichnet, dass die Enden (43', 46') der Bänder aus den beiden Kassetten oder Kassettenteilen selbsttätig miteinander verbindbar sind und dass beim Entkoppeln beide Bandenden (43', 46') jeweils an der Kassette und am Vorführgerät (40) unverrückbar festgehalten sind.

29. System nach Anspruch 28, dadurch gekennzeichnet, dass die in den Ein- oder Austrittsschlitzen der Kassette oder Kassettenteile liegenden oder aus diesen herausragenden Bandenden federnde Drähte mit über die Bandränder hervorstehenden federnden Haken (63, 64) tragen und eine konische Führung als Bandanschlag in der Kassette oder den Kassetten oder Kassettenteilen vorgesehen ist, welche beim Erreichen der Endstellung der Bandenden die Haken (63) des einen Bandendes (46') zusammendrücken, so dass sich diese unter die Haken (64) des anderen Bandendes (43') legen können.

30. System nach Anspruch 28, dadurch gekennzeichnet, dass die das bildlose Band tragende Kassette (44) gerätefest angeordnet ist und die das Diaband tragende Kassette (42) mit Hilfe einer Führung (T-Führung (50)) in das Vorführgerät (40) einschiebbar ist.

31. System nach Anspruch 30, dadurch gekennzeichnet, dass die das Diaband tragende Kassette (42) quer zur Laufrichtung des Bandes in das Vorführgerät (40) einschiebbar ist.

32. System nach Anspruch 29, dadurch gekennzeichnet, dass wenigstens ein federnder Draht (61) in einem Bandende (46') Mäanderform aufweist und in dieser Form zwischen den Abdeckungen befestigt ist.

33. System nach Anspruch 32, dadurch gekennzeichnet, dass der federnde Draht (61) zwischen den Abdeckungen eingeklebt ist.

34. System nach Anspruch 28, dadurch gekennzeichnet, dass die Bandenden (43′, 46′) zum selbsttätigen Befestigen aneinander übereinanderschiebbar sind.

35. System nach Anspruch 28, dadurch gekennzeichnet, dass die Bandenden (43′, 46′) zum selbsttätigen Befestigen aneinander aufeinanderstossend geführt sind.

36. System nach Anspruch 35, dadurch gekennzeichnet, dass die Bandenden (43′, 46′) zum selbsttätigen Befestigen aneinander unter Freilassung eines Spaltes aufeinanderstossend geführt sind.

37. System nach Anspruch 26, dadurch gekennzeichnet, dass wenigstens in eine der Kassetten (42, 44) ein in die Bandperforation eingreifendes Antriebsrad (Ritzel (51, 52)) für den Bandtransport eingreift.

38. System nach Anspruch 1, gekennzeichnet durch eine Abbildungsoptik für die Projektion eines Dias auf einen Bildschirm (Leinwand) sowie eine weitere Abbildungsoptik für die Projektion des nach diesem Dia im Band angeordneten Dias in ein Betrachtungsfenster (Mattscheibe (45)).

39. System nach Anspruch 1, gekennzeichnet durch einen Malteserkreuzantrieb für den Bandtransport sowie für die Betätigung einer Doppelblende.

40. System nach Anspruch 39, gekennzeichnet durch zwei gegensinnig umlaufende Blendenscheiben mit je zwei Blendenöffnungen, von denen jeweils eine Blendenöffnung jeder Scheibe den Projektionsstrahlengang für die Projektion des Dias auf den Bildschirm (Leinwand) freigibt und die andere den Projektionsstrahlengang für die Projektion des nachfolgenden Dias in das Betrachtungsfenster.

41. System nach Anspruch 39, dadurch gekennzeichnet, dass für den Bandtransport ein Dreierkreuz vorgesehen ist.

42. System nach Anspruch 39 oder 40, gekennzeichnet durch ein auf die Doppelblende oder die Blendenteile wirkendes Viererkreuz.

**Claims**

1. Projecting system for diapositives, wherein the diapositives are arranged band-like one after the other and are held by two flexible coverings situated on the two sides of the diapositives as well as by a mask situated in between and enframing the diapositives and are introduced by means of a drive, which simultaneously operates an aperture, successively into the projection place, the strip with the diapositives being rolled up outside the projection place, characterized in that the diapositives are kept unframed in the band, that the band is composed of partial pieces, which comprise a first flexible covering (2) with a plurality of picture openings (4), situated in a row side by side, and a second flexible covering, having the same number of picture openings (5), situated in a row side by side, that the coverings are connected with one another, that the one covering is displaced in the longitudinal direction in regard to the other covering by an image opening space, but, as for the rest, the picture openings are arranged one upon the other, that in each case the projecting covering piece of a partial piece of a band is connected with the projecting piece of the next partial piece of the band under superimposing of the picture openings, that in each case between the coverings a mask (6) is arranged, enframing the picture openings (4, 5) in both coverings (2, 3), that the opening (7) of each mask (6) is slightly larger than the diapositive (8), arranged therein between the coverings (2, 3) and slightly larger than the picture openings (4, 5), enframed by same, in the coverings (2, 3), that the mask is a little thicker than the diapositive (8), whereby the diapositive (8) is supported with clearance (9) on all sides in the mask (6) and between the coverings, and that the dimensions of the picture openings in the coverings are smaller than the diapositives to be inserted.

2. System according to claim 1, characterized in that the coverings are formed by foil pieces.

3. System according to claim 1, characterized in that each foil piece comprises two picture openings.

4. System according to claim 1, characterized in that the overlapping foil pieces are adhered or welded to one another.

5. System according to claim 1, characterized in that the coverings and/or the mask (6) are self-adhering.

6. System according to claim 1, characterized in that the diapositive (8) is cut by a cutting machine to the virtual image content or to the image content with a small border.

7. System according to claim 1, characterized in that the picture openings (4, 5) of the coverings comprise straight limitation lines.

8. System according to claim 1, characterized in that the limitations of the picture openings (4, 5) are formed by meander-like lines (20) and the flaps (21), directed in the direction to the picture field, are bendable out.

9. System according to claim 8, characterized in that the flaps (21) are bendable out by means of a provided stamp.

10. System according to claim 8, characterized in that the flaps (21) of the meander-shaped limitations of the picture openings are staggered («auf Lücke») in the first and second coverings (2, 3).

11. System according to claim 10, characterized in that the flaps (21), taken together in the first covering and second covering, form a straight-lined limitation of the picture opening.

12. System according to claim 1, characterized in that the coverings consist of temperature-stable foils (2, 3).

13. System according to claim 12, characterized in that the foils are temperature-stable up to about 200 °C.

14. System according to claim 1, characterized in that the diapositives (8) are supported between the coverings (2, 3) in the band (1) without additional covering, such as glass panes, transparent sheets.

15. System according to claim 1, characterized in that the picture openings of a covering are designed for the arrangement of diapositives in the upright size (204, 205) and/or the transverse size (104, 105).

16. System according to claim 1, characterized in that the picture openings are formed as squares.

17. System according to claim 1, characterized in that the picture openings in the masks are provided cross-shaped for the optional insertion of a diapositive of upright size or transverse size.

18. System according to claim 1, characterized in that the masks (6) comprise an outer square shape, but only one opening (7), adapted to the shape of a diapositive.

19. System according to claim 1, characterized in that the picture openings are punched out from the coverings and from the mask.

20. System according to claim 1, characterized in that the coverings and the masks comprise, at least, an additional opening (16, 17), provided with a material, adapted for inscription.

21. System according to claim 1, characterized in that for the band ends a first and/or second covering (15) is provided for the covering of an individual diapositive.

22. System according to claim 1, characterized in that the coverings comprise on their borders a performation (10, 11), extending in the band direction.

23. System according to claim 1, characterized in that the masks comprise a perforation on at least two opposing borders.

24. System according to claim 1, characterized in that the coverings comprise cut-off corners (12, 13, 14).

25. System according to claim 1, characterized in that the masks comprise cut-off corners.

26. System according to claim 1, characterized in that a cassette (42) or a cassette part is provided for the reception of the band (43), carrying the diapositives.

27. System according to claim 26, characterized in that a further cassette (44) or a cassette part with a band (46), carrying no diapositives, is provided.

28. System according to claim 27, characterized in that the ends (43', 46') of the bands from the two cassettes or cassette parts are self-actively connectable with one another, and that, when decoupling, both band ends (43', 46') are immovably held in each case on the cassette and on the projection apparatus (40).

29. System according to claim 28, characterized in that the band ends positioned in the inlet or outlet slots of the cassette or cassette parts or protruding therefrom carry resilient wires with resilient hooks (63, 64), protruding beyond the band edges, and (that) a conical guide is provided as band limit stop in the cassette or the cassettes or the cassette parts, which press together the hooks (63) of the one band end (46'), when the end position of the band ends is reached, so that same may lie down under the hooks (64) of the other band end (43').

30. System according to claim 28, characterized in that the cassette (44), carrying the pictureless band, is arranged apparatus-stationarily and that the cassette (42), carrying the band of diapositives, is slideable by means of a guide (T-guide (50)) into the projection apparatus (40).

31. System according to claim 30, characterized in that the cassette (42), carrying the band of diapositives, is slideable into the projection apparatus (40) transversely to the moving direction of the band.

32. System according to claim 29, characterized in that, at least, one resilient wire (61) in a band end (46') comprises meander-shape and is fixed in this shape between the coverings.

33. System according to claim 32, characterized in that the springy wire (61) is adhered between the coverings.

34. System according to claim 28, characterized in that the band ends (43', 46') are slideable one upon the other for the self-acting fastening to one another.

35. System according to claim 28, characterized in that the band ends (43', 46') are guided running into one another for the self-acting fastening to one another.

36. System according to claim 35, characterized in that the band ends (43', 46') are guided running into one another for the self-acting fastening to one another, a gap being maintained.

37. System according to claim 26, characterized in that, at least, into one of the cassettes (42, 44) a driving wheel (pinion (51, 52)), engaging the band perforation, for the band transportation is grasping.

38. System according to claim 1, characterized in that an imaging optics for the projection of a diapositive to a projecting screen (screen) as well as a further imaging optics for the projection of the diapositive arranged after this diapositive in the band to an observing window (ground glass disk (45)) are provided.

39. System according to claim 1, characterized by a Geneva drive unit for the conveying of the band as well as for the operation of a double-aperture.

40. System according to claim 39, characterized by two aperture-disks rotating in opposite directions having two aperture openings each, one aperture opening each of each disk thereof releasing the projection path of rays for the projection of the diapositive to the projecting screen (film screen) and the other one the projection path of rays for the projection of the consecutive diapositive to the observing window.

41. System according to claim 39, characterized in that, for the conveying of the band, a triple-cross is provided.

42. System according to claim 39 or claim 40, characterized by a phantom-cross acting upon the double-aperture or the aperture parts.

## Revendications

1. Système de projection de diapositives, dans lequel les diapositives sont disposées l'une derrière l'autre en forme de bande et sont maintenues par deux recouvrements flexibles placés sur les deux côtés des diapositives ainsi que par un masque situé en position intermédiaire et encadrant les diapositives, en étant introduites successivement dans le lieu de projection au moyen d'un entraînement, qui actionne simultanément un diaphragme, la bande portant les diapositives étant enroulée à l'extérieur du lieu de projection, caractérisé en ce que les diapositives sont maintenues encadrées dans la bande, en ce que la bande est composée d'éléments partiels qui comportent un premier recouvrement flexible (2) pourvu de plusieurs ouvertures d'image (4) placées en rangée l'une à côté de l'autre et un second recouvrement flexible pourvu du même nombre d'ouvertures d'image (5) placées en rangée l'une à côté de l'autre, en ce que les recouvrements sont reliés entre eux, en ce que l'un des recouvrements est décalé par rapport à l'autre recouvrement d'un espacement d'ouvertures d'image dans la direction longitudinale, en ce que par ailleurs cependant les ouvertures d'image sont disposées l'une au-dessus de l'autre, en ce que respectivement la partie de recouvrement placée au-dessus d'un élément partiel de bande est reliée à la partie de recouvrement placée au-dessus de l'élément partiel de bande suivant avec disposition l'une au-dessus de l'autre des ouvertures d'image, en ce qu'à chaque fois entre les recouvrements il est prévu un masque (6) encadrant les ouvertures d'image (4, 5) dans les deux recouvrements (2, 3), en ce que l'ouverture (7) de chaque masque (6) est un peu plus grande que la diapositive (8) placée dans celle-ci entre les recouvrements (2, 3) et est un peu plus grande que les ouvertures d'image (4, 5) encadrées par elle dans les recouvrements (2, 3), en ce que le masque est légèrement plus épais que la diapositive (8), de sorte que la diapositive (8) est montée de tous côté avec du jeu (9) dans le masque (6) et entre les recouvrements et en ce que les dimensions des ouvertures d'image prévues dans les recouvrements sont plus petites que les diapositives à placer.

2. Système selon la revendication 1, caractérisé en ce que les recouvrements sont constitués par des parties de feuille.

3. Système selon la revendication 1, caractérisé en ce que chaque partie de feuille comporte deux ouvertures d'image.

4. Système selon la revendication 1, caractérisé en ce que les parties de feuille se recouvrant sont collées ou soudées l'une avec l'autre.

5. Système selon la revendication 1, caractérisé en ce que les recouvrements et/ou le masque (6) sont auto-collants.

6. Système selon la revendication 1, caractérisé en ce que la diapositive (8) est découpée jusqu'au contenu d'image proprement dit au moyen d'une machine de découpage ou bien jusqu'au contenu d'image avec un léger bord.

7. Système selon la revendication 1, caractérisé en ce que les ouvertures d'image (4, 5) des recouvrements comportent des lignes droites de délimitation.

8. Système selon la revendication 1, caractérisé en ce que les délimitations des ouvertures d'image (4, 5) sont constituées par des lignes en forme de méandres (20) et les languettes (21) dirigées vers la zone d'image sont repliables.

9. Système selon la revendication 8, caractérisé en ce que les languettes (21) sont repliables au moyen d'un poinçon prévu.

10. Système selon la revendication 8, caractérisé en ce que les languettes (21) des délimitations en forme de méandres des ouvertures d'image sont disposées à intervalles dans le premier et le second recouvrement (2, 3).

11. Système selon la revendication 10, caractérisé en ce que les languettes (21) du premier et du second recouvrement constituent en coopération une délimitation rectiligne de l'ouverture d'image.

12. Système selon la revendication 1, caractérisé en ce que les recouvrements se composent de feuilles résistant à la température (2, 3).

13. Système selon la revendication 12, caractérisé en ce que les feuilles résistent à une température jusqu'à environ 200 °C.

14. Système selon la revendication 1, caractérisé en ce que les diapositives (8) sont montées sans recouvrement additionnel, comme des plaques de verre, des feuilles transparentes, entre les recouvrements (2, 3) dans la bande (1).

15. Système selon la revendication 1, caractérisé en ce que les ouvertures d'image d'un recouvrement sont agencées pour la disposition de diapositives dans le format de hauteur (204, 205) et/ou le format transversal (104, 105).

16. Système selon la revendication 1, caractérisé en ce que les ouvertures d'image ont une forme carrée.

17. Système selon la revendication 1, caractérisé en ce que les ouvertures d'image ménagées dans les masques sont agencées avec une forme de croix en vue d'une disposition sélective d'une diapositive dans le format en hauteur ou le format transversal.

18. Système selon la revendication 1, caractérisé en ce que les masques (6) ont une forme extérieure carrée mais comportent cependant seulement une ouverture (7) adaptée à une forme de diapositive.

19. Système selon la revendication 1, caractérisé en ce que les ouvertures d'image sont formées par poinçonnage dans les recouvrements et le masque.

20. Système selon la revendication 1, caractérisé en ce que les recouvrements et les masques comportent au moins une ouverture additionnelle (16, 17) formée d'une matière permettant une inscription.

21. Système selon la revendication 1, caractérisé en ce qu'il est prévu aux extrémités de la bande un premier et/ou un second recouvrement (15) pour recouvrir une diapositive isolée.

22. Système selon la revendication 1, caractérisé en ce que les recouvrements comportent sur leurs bords une perforation (10, 11) orientée dans la direction de la bande.

23. Système selon la revendication 1, caractérisé en ce que les masques comportent une perforation sur au moins deux bords opposés.

24. Système selon la revendication 1, caractérisé en ce que les recouvrements comportent des coins sectionnés (12, 13, 14).

25. Système selon la revendication 1, caractérisé en ce que les masques comportent des coins sectionnés.

26. Système selon la revendication 1, caractérisé en ce qu'il est prévu une cassette (42) ou une partie de cassette pour recevoir la bande (43) portant les diapositives.

27. Système selon la revendication 26, caractérisé en ce qu'il est prévu une autre cassette (44) ou une partie de cassette avec une bande (46) ne portant aucune diapositive.

28. Système selon la revendication 27, caractérisé en ce que les extrémités (43', 46') des bandes des deux cassettes ou parties de cassette peuvent être reliées entre elles automatiquement et en ce que, lors du désaccouplement, les deux extrémités de bande (43', 46') sont respectivement maintenues dans une position fixe sur la cassette et sur l'appareil de projection (40).

29. Système selon la revendication 28, caractérisé en ce que les extrémités de bande placées dans les fentes d'entrée ou de sortie de la cassette ou des parties de cassette ou bien dépassant de celles-ci portent des fils élastiques pourvus de crochets élastiques (63, 64) dépassant des bords de la bande et il est prévu un guide conique sous forme d'une butée de bande dans la cassette ou bien dans les cassettes ou parties de cassette, qui, lorsque les extrémités de bande atteignent la position limite, comprime les crochets (63) de l'une des extrémités de bande (46') de sorte que ceux-ci peuvent se placer en dessous des crochets (64) de l'autre extrémité de bande (43').

30. Système selon la revendication 28, caractérisé en ce que la cassette (44) portant la bande exempte d'image est solidaire de l'appareil et la cassette (42) portant la bande de diapositives peut être engagée dans l'appareil de projection (40) au moyen d'un guide (guide en T (50)).

31. Système selon la revendication 30, caractérisé en ce que la cassette (42) portant la bande de diapositives peut être introduite dans l'appareil de projection (40) perpendiculairement à la direction de déplacement de la bande.

32. Système selon la revendication 29, caractérisé en ce qu'au moins un fil élastique (61) prévu à une extrémité (46') de la bande a une forme de méandres et est fixé dans cette forme entre les recouvrements.

33. Système selon la revendication 32, caractérisé en ce que le fil élastique (61) est collé entre les recouvrements.

34. Système selon la revendication 28, caractérisé en ce que les extrémités de bande (43', 46') peuvent être engagées l'une au-dessus de l'autre en vue d'une fixation automatique l'une contre l'autre.

35. Système selon la revendication 28, caractérisé en ce que les extrémités de bande (43', 46') sont guidées en venant buter l'une sur l'autre pour une fixation automatique l'une avec l'autre.

36. Système selon la revendication 35, caractérisé en ce que les extrémités de bande (43', 46') sont guidées de façon à venir buter l'une sur l'autre en vue d'une fixation automatique l'une avec l'autre en ménageant un intervalle.

37. Système selon la revendication 26, caractérisé en ce qu'au moins dans une des cassettes (42, 44) il est prévu une roue d'entraînement (pignon (51, 52)) s'accrochant dans la perforation de la bande pour le transport de cette bande.

38. Système selon la revendication 1, caractérisé en ce qu'il est prévu un dispositif optique de formation d'image pour la projection d'une diapositive sur un écran (toile) ainsi qu'un autre dispositif optique de formation d'image pour la projection dans une fenêtre d'observation (disque mat (45)) de la diapositive disposée dans la bande après la diapositive précitée.

39. Système selon la revendication 1, caractérisé par un entraînement à croix de Malte pour le transport de bande ainsi que pour l'actionnement d'un double diaphragme.

40. Système selon la revendication 39, caractérisé par deux disques à diaphragmes tournant en sens inverses et comportant chacun deux ouvertures de diaphragme dont l'une dégage à chaque fois une ouverture de diaphragme de chaque disque pour laisser passer les rayons de projection de la diapositive vers l'écran (toile) tandis que l'autre dégage le trajet des rayons de projection de la diapositive suivante dans la fenêtre d'observation.

41. Système selon la revendication 39, caractérisé en ce qu'il est prévu une croix triple pour le transport de bande.

42. Système selon la revendication 39 ou 40, caractérisé par une croix quadruple agissant sur le double diaphragme ou sur les parties de diaphragme.

Fig. 1

Fig. 2

Fig. 3

Fig. 4

0 041 211

+104    + 105

13(14)    Fig.5

+
104 (105)    A-A    +
204(205)

2(3)

13(14)    13(14)    Fig.6

204
+    205
+

16    2(3)

13(14)    13(14)    Fig.7

+ 4
20
21    22

2

11    Fig.8

Fig.9

Fig. 10

Fig. 11

Fig. 12

Fig. 13 a

Fig. 13 b

Fig. 13 c

Fig. 14

Fig. 15 a

Fig. 15 b

Fig. 15 c

Fig. 16

0 041 211

23

0 041 211

59    60

58 (57)

Fig. 17

57    58

Fig. 18